# EUROPEAN PATENT SPECIFICATION

(11) **EP 4 634 749 B1**
(45) Date of publication and mention of the grant of the patent: **16.09.2026**
(21) Application number: 23841461.9
(22) Date of filing: 11.12.2023
(51) Int. Cl.: G06F 1/324, G06F 1/3296, G06F 1/16, G06F 1/3209, G06F 1/3215, G06F 1/3231, G06F 3/01, G09G 5/00

(54) **WEARABLE DEVICE ACTIVATION SIGNAL FOR PROACTIVE DYNAMIC VOLTAGE FREQUENCY SCALING IN COMPANION DEVICE**
AKTIVIERUNGSSIGNAL EINER WEARABLE-VORRICHTUNG ZUR PROAKTIVEN DYNAMISCHEN SPANNUNGSFREQUENZSKALIERUNG IN EINER BEGLEITVORRICHTUNG
SIGNAL D'ACTIVATION DE DISPOSITIF À PORTER SUR SOI POUR MISE À L'ÉCHELLE DE FRÉQUENCE DE TENSION DYNAMIQUE PROACTIVE DANS UN DISPOSITIF COMPAGNON

(30) Priority: 16.12.2022 IN 202241072822
(43) Date of publication of application: 22.10.2025
(73) Proprietor: QUALCOMM Incorporated, San Diego, California 92121-1714 (US)
(72) Inventor: SURENDRANATH, Ajay, San Diego, California 92121 (US)
(74) Representative: Carstens, Dirk Wilhelm
(86) International application number: PCT/US2023/083418
(87) International publication number: WO 2024/129610

(56) References cited:
- US-A1- 2021 185 294
- US-B1- 11 140 381

## Description

### CROSS-REFERENCE TO RELATED APPLICATIONS

This application claims priority to and the benefit of Indian Patent Application No. 202241072822, filed on December 16, 2022.

### FIELD

Aspects of the present disclosure relate generally to wearable devices (e.g., smart glasses, augmented reality (AR) viewers, wearable fitness devices, wearable health monitoring, smart watches, etc.), and in particular, to a wearable device generating an activation signal for proactive dynamic voltage frequency scaling (DVFS) in a companion or host device.

### BACKGROUND

Wearable devices, such as smart glasses, augmented or virtual reality (AR) or (VR) viewers or glasses, fitness measurement and tracking devices, health monitoring devices, medical treatment administering devices, smart watches, and others, are becoming more sophisticated, providing a multitude of functions. Due to their typically small form factor, wearable devices are generally equipped with relatively small data processors having limited computational power. As a result, wearable devices are often data coupled or tethered to a more computational power companion or host device, such as a smart phone, tablet device, desktop computer, laptop computer, network cloud device, etc. In such tethered configuration, a wearable device may offload data processing to the companion device, and receive the processed data from the companion device. Attention is drawn to US 11 140 381 B1 which relates to a method of operating a VR or AR head mounted display (HMD) system which includes obtaining a video performance parameter for a video signal, selecting a clock frequency for video data transfer within the HMD system based on the video performance parameter, detecting one or more available frequency bands for a wireless data connection between a host device and the HMD system, and selecting a frequency band from the one or more available frequency bands for the wireless data connection, based on a predetermined connection suitability parameter for the one or more available frequency bands and based on the selected clock frequency for video data transfer within the HMD system. The method further includes establishing a wireless connection between the host device and the HMD system over the selected frequency band. Further attention is drawn to document US 2021/185294 A1 which relates to rendering workload for an individual frame which can be split between a head-mounted display (HMD) and a host computer that is executing an application. To split a rendering workload for a frame, the HMD may send head tracking data to the host computer, and the head tracking data may be used by the host computer to generate pixel data associated with the frame and extra data in addition to the pixel data. The extra data can include, without limitation, pose data, depth data, motion vector data, and/or extra pixel data. The HMD may receive the pixel data and at least some of the extra data, determine an updated pose for the HMD, and apply re-projection adjustments to the pixel data based on the updated pose and the received extra data to obtain modified pixel data, which is used to present an image on the display panel(s) of the HMD.

### SUMMARY

The present invention is defined by the appended independent claims. Further embodiments of the present invention are defined by the appended dependent claims. The following presents a simplified summary of one or more implementations in order to provide a basic understanding of such implementations. This summary is not an extensive overview of all contemplated implementations, and is intended to neither identify key or critical elements of all implementations nor delineate the scope of any or all implementations. Its sole purpose is to present some concepts of one or more implementations in a simplified form as a prelude to the more detailed description that is presented later.

An aspect of the disclosure relates to a wearable device. The wearable device includes a compute subsystem configured to generate a first set of data; a dynamic voltage frequency scaling (DVFS) subsystem configured to generate a signal requesting an increase in a DVFS level in accordance which a companion device is to process the first set of data; and a communication interface configured to send the DVFS requesting signal prior to sending the first set of data to the companion device.

Another aspect of the disclosure relates to a method of operating a wearable device. The method includes generating a first set of data; generating a signal requesting an increase in a dynamic voltage frequency scaling (DVFS) level in accordance which a companion device is to process the first set of data; sending the DVFS requesting signal to the companion device; and sending the first set of data to the companion device after sending the DVFS requesting signal.

Another aspect of the disclosure relates to a companion device for a wearable device. The companion device includes: a communication interface configured to receive a signal requesting an increase in a dynamic voltage frequency scaling (DVFS) level from a wearable device; a DVFS subsystem configured to generate a supply voltage and a clock signal based on the requested DVFS level; and a compute subsystem configured to receive the supply voltage and clock signal from the DVFS subsystem.

Another aspect of the disclosure relates to a method of operating a companion device. The method includes receiving a signal requesting an increase in a dynamic voltage frequency scaling (DVFS) level from a wearable device; generating a supply voltage and a clock signal based on the requested DVFS level; receiving a first set of data after receiving the DVFS requesting signal; and processing the first set of data to generate a second set of data based on the supply voltage and the clock signal.

To the accomplishment of the foregoing and related ends, the one or more implementations include the features hereinafter fully described and particularly pointed out in the claims. The following description and the annexed drawings set forth in detail certain illustrative aspects of the one or more implementations. These aspects are indicative, however, of but a few of the various ways in which the principles of various implementations may be employed and the description implementations are intended to include all such aspects.

### BRIEF DESCRIPTION OF THE DRAWINGS

FIG. 1 illustrates a perspective view of an example wearable device (e.g., an augmented reality (AR) glasses) in accordance with an aspect of the disclosure.
FIG. 2 illustrates a front view of an example companion device (e.g., a smart phone) in accordance with another aspect of the disclosure.
FIG. 3A illustrates a block diagram of an example data processing system including a wearable device tethered to a companion device in accordance with another aspect of the disclosure.
FIG. 3B illustrates a flow diagram of an example method of processing data by the wearable device of FIG. 3A in accordance with another aspect of the disclosure.
FIG. 3C illustrates a flow diagram of an example method of processing data by the companion device of FIG. 3A in accordance with another aspect of the disclosure.
FIG. 3D illustrates a graph depicting example relationships between clock frequency, computational load, and time related to the companion device of FIG. 3A in accordance with another aspect of the disclosure.
FIG. 4A illustrates a block diagram of another example data processing system including a wearable device tethered to a companion device in accordance with another aspect of the disclosure.
FIG. 4B illustrates a flow diagram of an example method of processing data by the wearable device of FIG. 4A in accordance with another aspect of the disclosure.
FIG. 4C illustrates a flow diagram of another example method of processing data by the wearable device of FIG. 4A in accordance with another aspect of the disclosure.
FIG. 4D illustrates a flow diagram of an example method of processing data by the companion device of FIG. 4A in accordance with another aspect of the disclosure.
FIG. 4E illustrates a graph depicting example relationships between clock frequency, computational load, and time related to the companion device of FIG. 4A in accordance with another aspect of the disclosure.
FIG. 5 illustrates a table depicting various frame and motion differences with respect to different thresholds, and corresponding states of a dynamic voltage frequency scaling (DVFS) request signal in accordance with another aspect of the disclosure.
FIG. 6 illustrates a flow diagram of an example method of operating a wearable device in accordance with another aspect of the disclosure.
FIG. 7 illustrates a flow diagram of an example method of operating a companion device in accordance with another aspect of the disclosure.

### DETAILED DESCRIPTION

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

Wearable devices have become very popular and ubiquitous. Such wearable devices include smart glasses, augmented reality (AR) or virtual reality (VR) viewers or glasses, fitness measurement and tracking devices, health monitoring devices, medical treatment devices, smart watches, and others. Due to their generally small form factor, wearable devices are typically equipped with relatively small data processors having limited computational power.

As a consequence, wearable devices are often data coupled or tethered to a more computational power companion or host device, such as a smart phone, tablet device, desktop computer, laptop computer, local area network (LAN) server, wide area network (WAN) server, network cloud device, etc. In this configuration, the wearable device may generate data, communicate the data to the companion device for processing, and receive the processed data from the companion device. The wearable device may perform various operations based on the received processed data, such as rendering the processed data on one or more displays and/or other operations described herein. When receiving the data for processing, the companion device may be in a lower power mode (e.g., a sleep mode) for battery conservation purposes; and therefore, may have to reconfigure itself in a higher power mode for processing the data.

As a result of the transition from lower to higher power mode, there may be a lag in getting the processed data to the wearable device, which may produce display artifacts (e.g., frame stuttering, low frame rate, glitches, and/or other image rendering distortion) in the wearable device. In certain situations, the display artifacts may adversely affect the health of the user, such as causing nausea due to a lag between what is being displayed to the user and the movement of the user. These concepts are explained in more detail as described further herein.

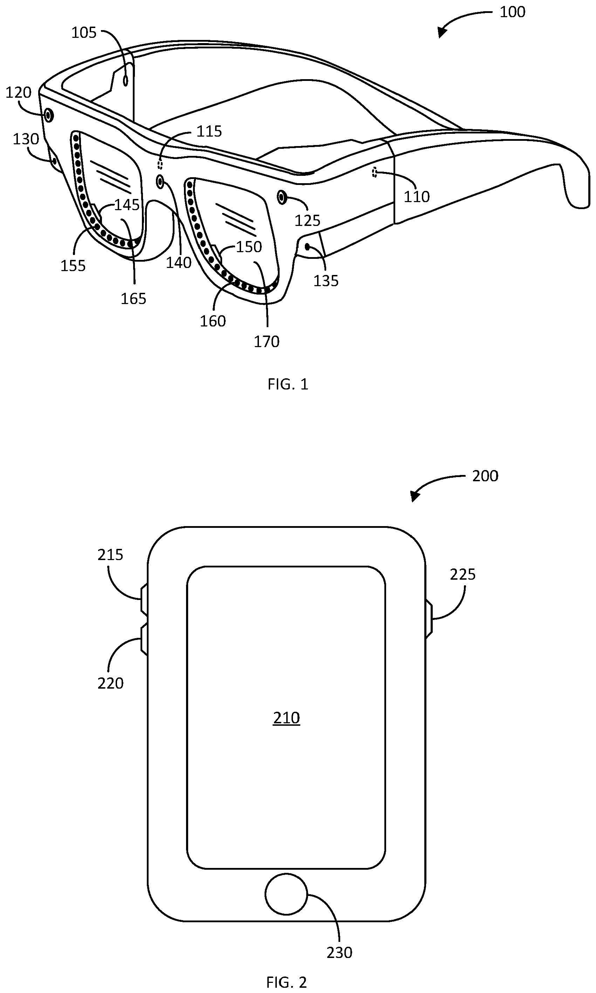

FIG. 1 illustrates a perspective view of an example wearable device (e.g., an augmented reality (AR) viewer or glasses) in accordance with an aspect of the disclosure. The AR glasses 100 is an example of a wearable device. It shall be understood that a wearable device described herein may take on many different forms, such as other types of viewers or glasses (e.g., virtual reality (VR) viewer or glasses), fitness measurement and tracking devices, health monitoring devices, medical treatment devices, smart watches, earpieces, and others.

The AR glasses 100 may include a set of skin temperature sensors 105, 110, and 115. The skin temperature sensor 105 may be situated on the right temple of the AR glasses 100. The skin temperature sensor 110 may be situated on the left temple of the AR glasses 100. The skin temperature sensor 115 may be positioned on the interior nose bridge of the AR glasses 100. The AR glasses 100 may further includes right and left six-degree of freedom (6DOF) cameras 120 and 125 pointing generally forward, and situated on the exterior right and left rims near the right and left hinges of the AR glasses 100, respectively. The AR glasses 100 may also include right and left infrared (IR) LEDs 130 and 135 also pointing generally forward, and situated near the exterior right and left rims below the right and left 6DOF cameras 120 and 125, respectively. Further, the AR glasses 100 may include a video (e.g., red, green, blue (RGB)) camera 140 pointing generally forward, and situated on the exterior nose bridge of the AR glasses 100.

For eye tracking, the AR glasses 100 may include right and left eye tracking cameras 145 and 150 pointing in the direction of the right and left eyes of a user when the AR glasses are worn, and situated on the interior sides of the right and left rims, respectively. Further, the AR glasses 100 may include right and left infrared (IR) LED rings (e.g., series-connected LEDs) 155 and 160 for illuminating the right and left eye regions of a user when the AR glasses are worn, and situated along the interior surfaces of the right and left rims, respectively. The AR glasses 100 may also include right and left lenses 165 and 170 that also function as right and left displays, respectively. It shall be understood that the aforementioned components, placements, and orientations are merely examples, and such configuration of an AR glasses may take on many different forms.

FIG. 2 illustrates a front view of an example companion device 200 in accordance with another aspect of the disclosure. In this example, the companion device 200 is a smart phone; but as discussed, a companion device may take on various different forms, such as a tablet device, desktop computer, laptop computer, server, local area network (LAN) server, wide area network (WAN) server, etc. As a smart phone, the companion device 200 may include a touchscreen 210, a set of one or more physical buttons 215, 220, and 225, and a set of one or more virtual/physical buttons 230.

As previously mentioned, the AR viewer 100, being typically a smaller form factor device compared to the smart phone 200, may include data processors or other data computational devices that are less powerful than the data processors or other computational devices in the smart phone 200. As a consequence of this configuration, the AR viewer 100 may leverage the data processing power of the smart phone 200. Accordingly, in this regard, the AR viewer 100 may send data to be processed to the smart phone 200 via a wireless and/or wired communication link (e.g., Bluetooth, WiFi, cellular, Universal Serial Bus (USB), etc.). In this scenario, it may be said that the AR viewer 100 is tethered to the smart phone 200. The smart phone 200 then processes the data using its more powerful data processors or other computational devices, and sends the processed data to the AR viewer 100 via the communication link. The AR viewer 100 may then perform various operations based on the processed data, such as rendering images on one or more of the displays 165 and 170.

As previously mentioned, the smart phone 200 may enter a low power mode (e.g., a sleep mode) in order to conserve battery power. If, at such time, the AR viewer 100 sends a significant amount of data to the smart phone 200 for processing, the smart phone 200 may then enter a higher power mode in order to process the data from the AR viewer 100, as often such data is image/video data, object pose data, and other graphics data, which typically requires significant computing power to process in a sufficient time so that it does not adversely affect the user experience. The transitioning from the lower power mode to the higher power mode is typically not instantaneous, and some lag or delay results in processing the data and sending the data back to the AR viewer 100 for rendering. As a consequence, the lag or time delay may result in image or display artifacts (e.g., frame stuttering, low frame rates, glitches, and/or other image rendering distortion) in accordance with the AR viewer 100 display rendering operations based on the data received from the smart phone 200; which, as discussed, may cause harmful health effects on the user (e.g., dizziness, nausea, etc.).

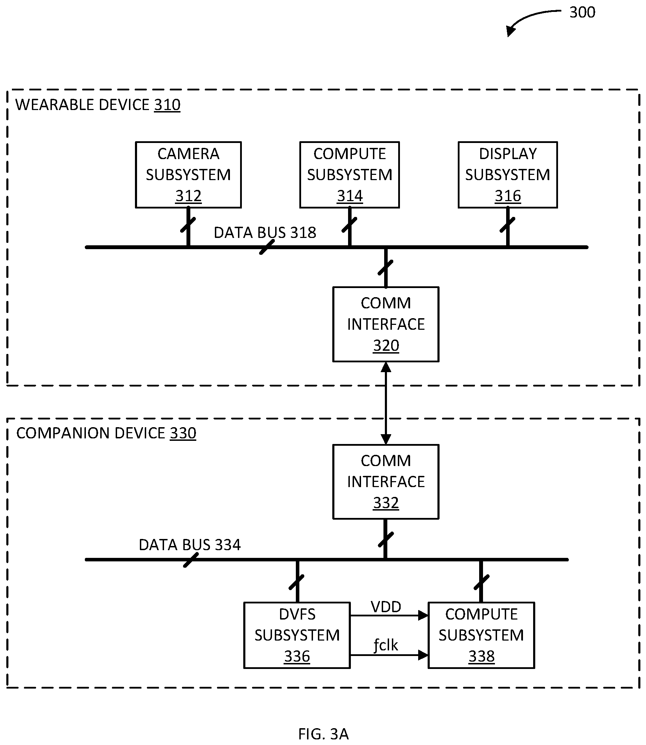

FIG. 3A illustrates a block diagram of an example data processing system 300 including a wearable device 310 tethered to a companion device 330 in accordance with another aspect of the disclosure. The wearable device 310 may include a camera subsystem 312, a compute subsystem 314, and a display subsystem 316, all data coupled to a data bus 318. The wearable device 310 may further include a wireless and/or wired communication interface 320 (e.g., a Bluetooth, WiFi, Cellular, USB, or other communication interface) also coupled to the data bus 318.

If the wearable device 310 is implemented as an AR viewer, such as AR viewer 100, the camera subsystem 312 may include the 6DOF cameras 120 and 125, the video camera 140, and/or the eye tracking cameras 145 and 150. The display subsystem 316 may include the right display 165 and/or the left display 170. The compute subsystem 314 may include a central processing unit (CPU), a graphics processing unit (GPU), a digital signal processor (DSP), other specialized processors and/or accelerators, such as for object detection and late stage reprojection (LSR), and/or other data computing devices. It shall be understood that the wearable device 310 may be configured differently, including more components, different components, and less components, depending on its intended requirements and applications.

The companion device 330 may include a wireless and/or wired communication interface 332 (e.g., a Bluetooth, WiFi, Cellular, USB, or other communication interface) coupled to a data bus 334. Additionally, the companion device 330 may include a dynamic voltage frequency scaling (DVFS) subsystem 336 and a compute subsystem 338 (e.g., CPU, GPU, DSP, specialized processors and/or accelerators, etc.), both coupled to the data bus 334. The DVFS subsystem 336 may be configured to generate a supply voltage VDD and a clock signal fclk based on a current DVFS level. The DVFS level specifies the level of the supply voltage VDD and the frequency of the clock signal fclk. For example, if the compute subsystem 338 has a relatively low computational load, the DVFS subsystem 336 may provide a relatively low supply voltage VDD and a relatively low frequency clock signal fclk to the compute subsystem 338. If the compute subsystem 338 has a relatively high computational load, the DVFS subsystem 336 may provide a relatively high supply voltage VDD and a relatively high frequency clock signal fclk to the compute subsystem 338. There may be multiple DVFS levels (e.g., distinct combinations of VDD and frequencies of the clock signal fclk) corresponding to different computational loads, respectively.

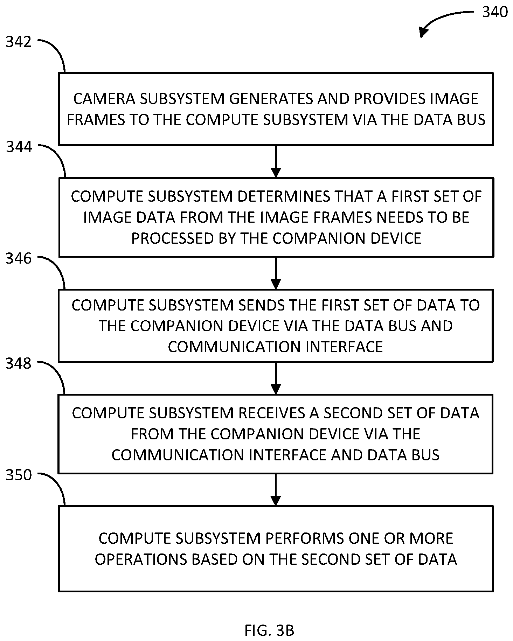

FIG. 3B illustrates a flow diagram of an example method 340 of processing data by the wearable device 310 in accordance with another aspect of the disclosure. The method 340 may be implemented by the wearable device 310.

According to the method 340, the camera subsystem 312 generates and provides one or more image frames to the compute subsystem 314 via the data bus 318 (block 342). The compute subsystem 314 then determines that a first set of image data from the one or more image frames needs to be processed by the companion device 330 (block 344). For example, the one or more image frames may include a newly detected object (e.g., the first set of image data) that may require three-dimensional (3D) model processing by the companion device 330, or the pose of an already-detected object (e.g., the first set of image data) has changed requiring processing by the companion device 330. Then, the compute subsystem 314 sends the first set of data to the companion device 330 via the data bus 318 and the communication interface 320 (block 346).

Then, according to the method 340, the compute subsystem 314 receives a second set of data from the companion device 330 via the communication interface 320 and the data bus 318 (block 348). The second set of data may include graphics overlay based on the first set of image data (e.g., adding or adjusting the pose of animated eyeglasses to or on a detected face), object (e.g., face, hand, body, etc.) detection data, 3D mesh/plane data, head pose data, and/or other. Then the compute subsystem 314 performs one or more operations based on the the second set of data, such as rendering images on the display subsystem 316 via the data bus 318 (block 350). As an example, the display subsystem 316 displays the detected face with the animated eyeglasses. It shall be understood that AR applications may be significantly diverse, e.g., providing a wide variety of overlay animation/information to a wide variety of detected objects and new poses thereof.

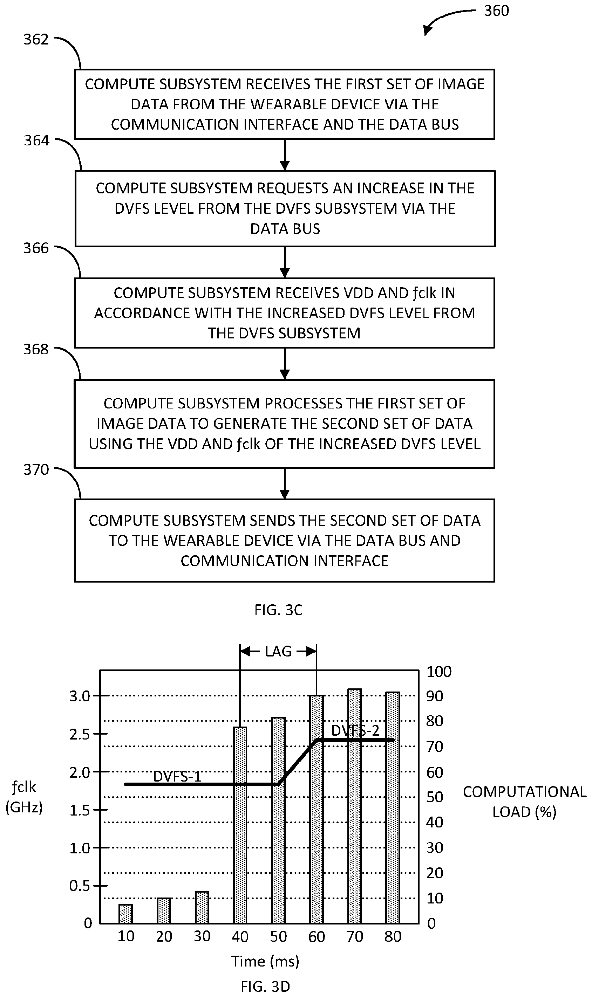

FIG. 3C illustrates a flow diagram of an example method 360 of processing data by the companion device 330 in accordance with another aspect of the disclosure. The method 360 may be implemented by the companion device 330.

According to the method 360, the compute subsystem 338 receives the first set of image data from the wearable device 310 via the communication interface 332 and the data bus 334 (block 362). In this example, the compute subsystem 338 received the first set of image data when it was operating in a low power mode (e.g., sleep mode) in accordance with a relatively low DVFS level (e.g., where the supply voltage VDD and the frequency of the clock signal fclk frequency are relatively low). Accordingly, the compute subsystem 338 sends a request for a higher DVFS level (e.g., a higher VDD or clock frequency fclk) to the DVFS subsystem 336 via the data bus 334 (block 364).

Then, according to the method 360, the compute subsystem 338 receives the supply voltage VDD and clock signal fclk with frequency in accordance with the increased DVFS level from the DVFS subsystem 336 (block 366). Then, the compute subsystem 338 processes the first set of image data to generate the second set of data using the supply voltage VDD and clock signal fclk with frequency in accordance with the increased DVFS level (block 368). The compute subsystem 338 then sends the second set of data to the wearable device 310 via the data bus 334 and the communication interface 332 (block 370).

FIG. 3D illustrates a graph depicting example relationships between clock frequency, computational load, and time related to the companion device 330 in accordance with another aspect of the disclosure. The x- or horizontal axis of the graph represents time ranging from 10 to 80 milliseconds (ms). The left y- or vertical axis represents the frequency of the clock signal fclk from zero (0) to above 3.0 giga Hertz (GHz). The right y- or vertical axis represents percent (%) computational load on the compute subsystem 338 of the companion device 330 ranging from zero (0) to 100%.

According to the graph, the compute subsystem 338 has yet to receive the first set of image data from the wearable device 310 prior to time 40ms. Accordingly, during time interval 10-30ms, the compute subsystem 338 has a computational load varying around 10%. Because of the small computational load, the compute subsystem 338 is operating in accordance with a relatively low DVFS level (e.g., DVFS-1, where the supply voltage VDD and the frequency of the clock signal fclk are relatively low). The relatively low DVFS-1 allows the compute subsystem 338 to process the relatively low computational load while conserving battery power as the supply voltage VDD and the frequency of the clock signal fclk are relatively low.

Then, according to the graph, the compute subsystem 338 receives the first set of image data at time 40ms. Accordingly, due to the first set of image data, the computational load on the compute subsystem 338 increases to almost 80% at time 40ms. With the current DVFS-1 level, the compute subsystem 338 is not able to process the first set of image data in a fast and efficient manner. Accordingly, at around time 40ms, the compute subsystem 338 sends a request to the DVFS subsystem 336 for the higher or increased DVFS-2. In response, the DVFS subsystem 336 provides the higher supply voltage VDD and higher frequency clock signal fclk to the compute subsystem 338 in accordance with DVFS-2 at time 60ms. Thus, during time interval 40 to 60ms, the compute subsystem 338 is processing the first set of data to generate the second set of data, and sending the second set of data to the wearable device 310 while sub optimally operating at the lower DVFS-1.

Due to a time lag between receiving the first set of image data (at time 40ms) and operating in the higher DVFS-2 level (at time 60ms), the wearable device 310 is not able to receive the second set of data in a manner that performing display rendering operations is without display artifacts (e.g., frame stuttering, low frame rate, glitches, and/or other image distortion). As a result, during the time lag, the wearable device 310 renders image frames with such image or display artifacts, which reduces the user experience with the wearable device 310, and may cause harmful health effects upon the user (e.g., dizziness, nausea, etc.).

Then, when the higher supply voltage VDD and higher frequency of the clock signal fclk in accordance with the increased DVFL-2 level are provided to the compute subsystem 338, the compute subsystem 338 is able to process the first set of image data to generate the second set of data in a more optimal manner, such that the wearable device 310 is able to receive the second set of data in a manner that does not result in image or display artifacts. However, because of the time lag, the user will experience a few frames (e.g., 4-5 frames) with the aforementioned image or display artifacts, which may be undesirable.

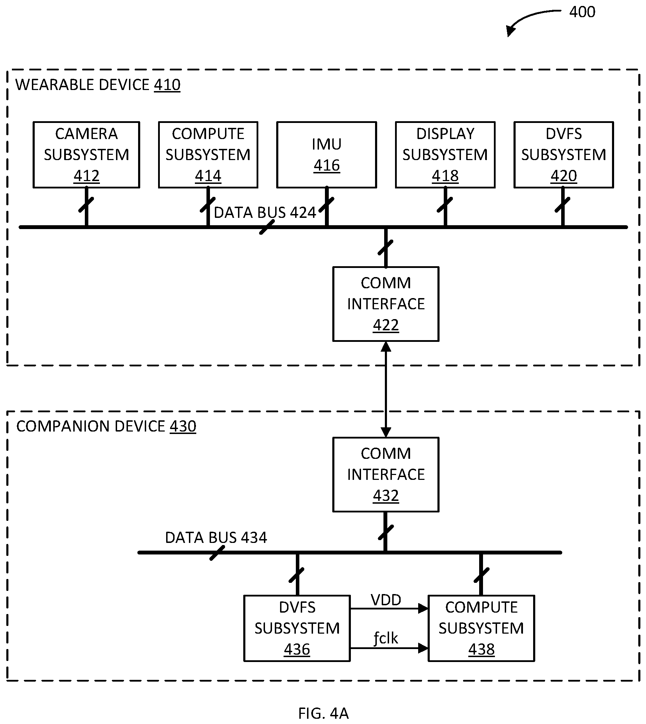

FIG. 4A illustrates a block diagram of another example data processing system 400 including a wearable device 410 tethered to a companion device 430 in accordance with another aspect of the disclosure. The wearable device 410 may include a camera subsystem 412, a compute subsystem 414, an inertial measurement unit (IMU) 416, a display subsystem 418, and a dynamic voltage frequency scaling (DVFS) subsystem 420, all data coupled to a data bus 424. The wearable device 410 may further include a wireless and/or wired communication interface 422 (e.g., a Bluetooth, WiFi, Cellular, USB, or other communication interface) coupled to the data bus 424.

If the wearable device 410 is implemented as an AR viewer, such as AR viewer 100, the camera subsystem 412 may include the 6DOF cameras 120 and 125, the video camera 140, and/or the eye tracking cameras 145 and 150. The display subsystem 418 may include the right display 165 and/or the left display 170. The compute subsystem 414 may include a central processing unit (CPU), a graphics processing unit (GPU), a data signal processor (DSP), other specialized processors and/or accelerators, such as for object detection and late stage reprojection (LSR), and/or other data computing devices. The IMU 416 generates a signal related to movement of the AR viewer 100 (or generally, the wearable device 410). As discussed in more detail further herein, the DVFS subsystem 420 is configured to generate a signal requesting the companion device 430 to operate with a higher or increased DVFS prior to receiving data-to-be-processed from the wearable device 410. It shall be understood that the wearable device 410 may be configured differently, including more components, different components, and less components, depending on its intended requirements and applications.

The companion device 430 may include a communication interface 432 (e.g., a Bluetooth, WiFi, Cellular, USB, or other communication interface) coupled to a data bus 434. Additionally, the companion device 430 may include a dynamic voltage frequency scaling (DVFS) subsystem 436 and a compute subsystem 438 (e.g., CPU, GPU, DSP, specialized processors and/or accelerators, etc.), both coupled to the data bus 434. The DVFS subsystem 436 may be configured to generate a supply voltage VDD and a clock signal fclk based on a current DVFS level. As previously discussed, the DVFS level specifies the level of the supply voltage VDD and the frequency of the clock signal fclk. For example, if the compute subsystem 438 has a relatively low computational load, the DVFS subsystem 436 may provide a relatively low supply voltage VDD and a relatively low frequency clock signal fclk to the compute subsystem 438 for battery conservation purposes. If the compute subsystem 438 has a relatively high computational load, the DVFS subsystem 436 may provide a relatively high supply voltage VDD and a relatively high frequency clock signal fclk to the compute subsystem 438 to perform data processing in a fast and efficient manner. There may be multiple DVFS levels (e.g., distinct combinations of VDD and frequencies of the clock signal fclk) corresponding to different computational loads, respectively.

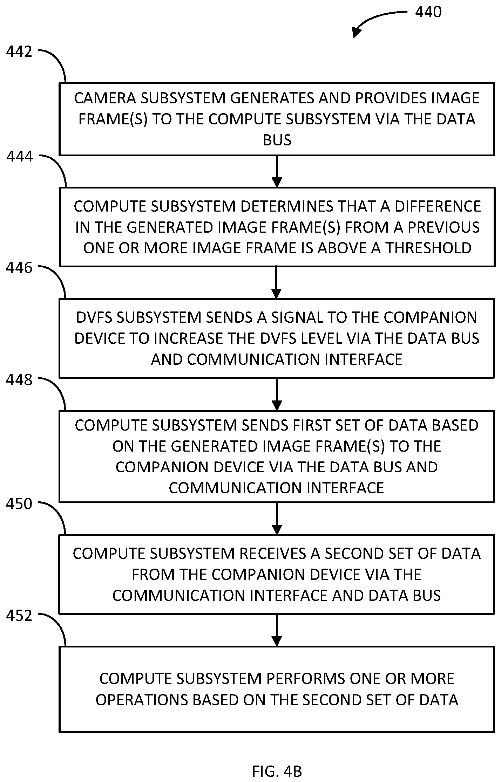

FIG. 4B illustrates a flow diagram of an example method 440 of processing data by the wearable device 410 in accordance with another aspect of the disclosure. The method 440 may be implemented by the wearable device 410.

According to the method 440, the camera subsystem 412 generates and provides one or more image frames to the compute subsystem 414 via the data bus 424 (block 442). The compute subsystem 414 then determines that an image difference (e.g., a pixel difference) between the generated one or more image frames and one or more previously generated one or more image frames is above a defined threshold (block 444). This may indicate that the newly generated one or more image frames is likely to (but not necessarily) have data that needs to be processed by the companion device 430. In response to the image difference being above the defined threshold, the compute subsystem 414 may instruct the DVFS subsystem 420 to send a signal requesting an increased DVFS level to the companion device 430 via the data bus 424 and communication interface 422, as it anticipates sending data thereto for processing (block 446).

Then, according to the method 440, the compute subsystem 414 analyzes the generated one or more image frames, determines that a first set of image data therefrom needs to be processed by the companion device 430, and sends the first set of image data to the companion device 430 via the data bus 424 and the communication interface 422 (block 448). Then, the compute subsystem 414 receives a second set of data from the companion device 430 via the communication interface 422 and the data bus 424 (block 450). The second set of data may include graphics overlay based on the first set of image data (e.g., adding or adjusting a pose of an animated eyeglasses to a detected face), object (e.g., face, hand, body, etc.) detection data, 3D mesh/plane data, head pose data, and/or other. Then the compute subsystem 414 performs one or more operations based on the second set of data, such as rendering images on the display subsystem 418 via the data bus 424 (block 452). As an example, the display subsystem 418 displays the detected face with the animated eyeglasses. It shall be understood that AR applications may be significantly diverse, e.g., providing a wide variety of overlay animation/information to a wide variety of detected objects and new poses thereof.

In contrast to the method 340 implemented by wearable device 310, the wearable device 410 sends an increase DVFS level request signal to the companion device 430 prior to or in anticipation of sending the first set of image data to be processed by the companion device 430. This allows time for the companion device 430 to raise its DVFS level in anticipation of receiving the first set of image data from the wearable device 410. As a consequence, when the companion device 430 receives the first set of image data from the wearable device 410, the companion device 430 is operating at the higher DVFS level, and is able to more optimally process the first set of image data to generate and send the second set of data to the wearable device 410. As a result, the display rendering based on the second set of data may not produce display artifacts, which improves the user experience with the wearable device 410 and is less likely to cause harmful health effects on the user.

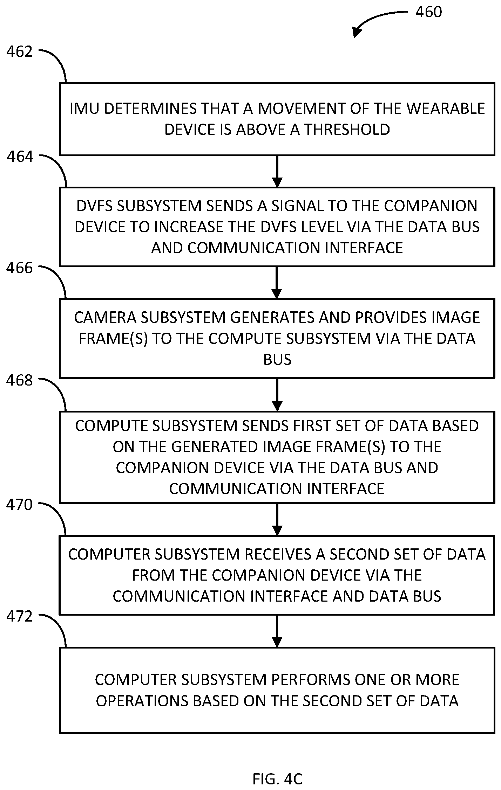

FIG. 4C illustrates a flow diagram of another example method 460 of processing data by the wearable device 410 in accordance with another aspect of the disclosure. The method 460 may be implemented by the wearable device 410.

According to the method 460, the IMU 416 determines that a movement of the wearable device 410 is above a defined threshold (block 462). Such movement of the wearable device 410 may indicate that one or more image frames generated coincident with the movement is likely to (but not necessarily) have data that needs to be processed by the companion device 430. In response to the movement being above the defined threshold, the IMU 416 may instruct the DVFS subsystem 420 to send a signal requesting an increase DVFS level to the companion device 430 via the data bus 424 and communication interface 422, as it anticipates sending data thereto for processing (block 464). As discussed, coincidental with the movement of the wearable device 410, the camera subsystem 412 generates and provides one or more image frames to the compute subsystem 414 via the data bus 424 (block 466).

Then, according to the method 460, the compute subsystem 414 analyzes the one or more image frames, determines that a first set of image data therefrom needs to be processed by the companion device 430, and sends the first set of image data to the companion device 430 via the data bus 424 and the communication interface 422 (block 468). Then, the compute subsystem 414 receives a second set of data from the companion device 430 via the communication interface 422 and the data bus 424 (block 470). The second set of data may include graphics overlay based on the first set of image data (e.g., adding or adjusting a pose of animated eyeglasses to a detected face), object (e.g., face, hand, body, etc.) detection data, 3D mesh/plane data, head pose data, and/or other. Then the compute subsystem 414 performs one or more operations based on the second set of data, such as rendering images on the display subsystem 418 via the data bus 424 (block 472). As an example, the display subsystem 418 displays the detected face with the animated eyeglasses. It shall be understood that AR applications may be significantly diverse, e.g., providing a wide variety of overlay animation/information to a wide variety of detected objects and new poses thereof.

Similarly, in contrast to the method 340 implemented by wearable device 310, the wearable device 410 sends an increased DVFS request signal to the companion device 430 prior to or in anticipation of sending the first set of image data to be processed by the companion device 430. This allows time for the companion device 430 to raise its DVFS level in anticipation of receiving the first set of image data from the wearable device 410. As a consequence, when the companion device 430 receives the first set of image data from the wearable device 410, the companion device 430 is operating at the higher DVFS level, and is able to more optimally process the first set of image data to generate and send the second set of data to the wearable device 410. As a result, display rendering based on the second set of data may not produce display artifacts, which improves the user experience with the wearable device 410 and is less likely to cause harmful health effects on the user.

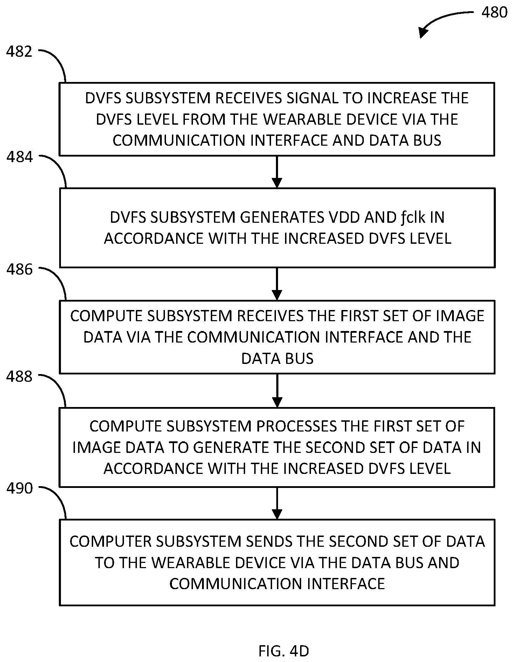

FIG. 4D illustrates a flow diagram of an example method 480 of processing data by the companion device 430 in accordance with another aspect of the disclosure. The method 480 may be implemented by the companion device 430.

According to the method 460, the DVFS subsystem 436 receives the signal requesting an increase DVFS level from the wearable device 410 via the communication interface 432 and the data bus 434 (block 482). In response to the signal, the DVFS subsystem 436 generates the supply voltage VDD and the frequency of the clock signal fclk for the compute subsystem 438 based on the higher or increased DVFS level (block 484). Then, the compute subsystem 438 receives the first set of image data from the wearable device 410 via the communication interface 432 and the data bus 434 (block 486).

Then, according to the method 460, the compute subsystem 438 processes the first set of image data to generate the second set of data using the supply voltage VDD and clock signal fclk with frequency in accordance with the increased DVFS level (block 488). The compute subsystem 438 then sends the second set of data to the wearable device 410 via the data bus 434 and the communication interface 432 (block 490).

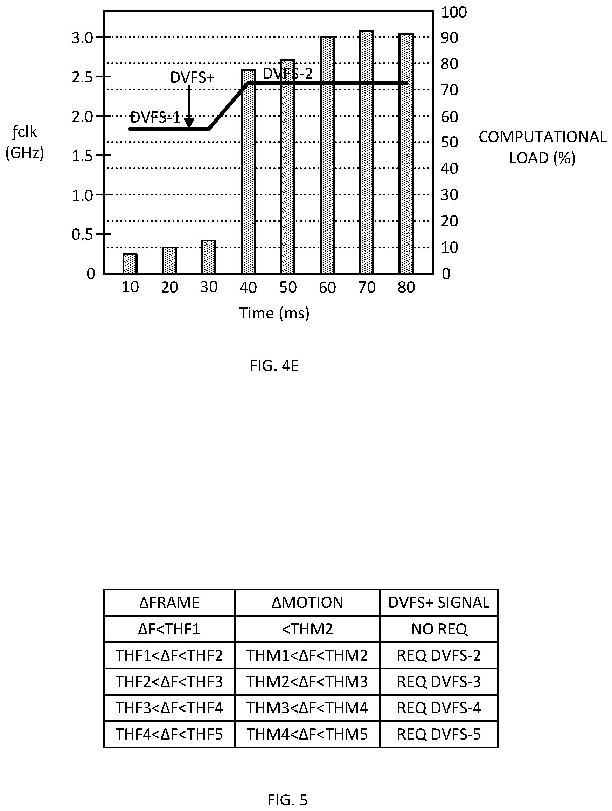

FIG. 4E illustrates a graph depicting example relationships between clock frequency, computational load, and time related to the companion device 430 in accordance with another aspect of the disclosure. The x- or horizontal axis of the graph represents time ranging from 10 to 80 milliseconds (ms). The left y- or vertical axis represents the frequency of the clock signal fclk from zero (0) to above 3.0 giga Hertz (GHz). The right y- or vertical axis represents percent (%) computational load on the compute subsystem 438 of the companion device 430 ranging from zero (0) to 100%.

According to the graph, the compute subsystem 438 has yet to receive the DVFS increase signal ("DVFS+") and first set of image data from the wearable device 410 prior to time 30ms. Accordingly, during time interval 10-30ms, the compute subsystem 438 has a computational load varying around 10%. Because of the small computational load, the compute subsystem 438 is operating in accordance with a relatively low DVFS level (e.g., DVFS-1, where the supply voltage VDD and the frequency of the clock signal fclk are relatively low). The relatively low DVFS-1 allows the compute subsystem 438 to process the relatively low computational load while conserving battery power as the supply voltage VDD and the frequency of the clock signal fclk are relatively low.

Then, according to the example, the DVFS subsystem 436 receives the DVFS+ request signal from the wearable device 410. In response to the DVFS+ request signal, the DVFS subsystem 436 generates the supply voltage VDD and the frequency of the clock signal fclk in accordance with the increased DVFS-2 level. Then, at time 40ms, the compute subsystem 438 receives the first set of image data. Accordingly, due to the first set of image data, the computational load on the compute subsystem 438 is at almost 80%. However, now that the compute subsystem 438 is operating in accordance with the higher DVFS-2 level, the compute subsystem 438 is able to process the first set of image data in a more optimal manner. Accordingly, the compute subsystem 438 processes the first set of data to generate the second set of data, and sends the second set of data to the wearable device 410 while more optimally operating at the higher DVFS-2. As a result, the wearable device 410 is able to receive and perform rendering operations based on the second set of data without producing display artifacts, which improves the user experience with the wearable device 410 and is less likely to cause harmful health effects on the user.

FIG. 5 illustrates a table depicting various frame difference (ΔFrame or ΔF) and motion differences (ΔMotion or ΔM) with respect to different thresholds, and corresponding states of a dynamic voltage frequency scaling (DVFS+) request signal in accordance with another aspect of the disclosure. The left column of the table indicates the frame difference (ΔFrame or ΔF) with regard to various frame difference thresholds THF1 to THF5. Similarly, the middle column of the table indicates the motion difference (ΔMotion or ΔM) with regard to various motion thresholds THM1 to THFM. And, the right column indicates the corresponding states of the DVFS+ request signal.

In the example methods 440, 460, and 480, the DVFS+ request signal has been described as having two states, i.e., no DVFS+ increase state and a DVFS+ increase state. However, it shall be understood that the DVFS+ signal may have a set of states depending on the degree of change in the generated frames by the wearable device 410 or the degree of motion of the wearable device 410. For example, as indicated in the first row below the header row, if the image or frame difference ΔF is below a first frame difference threshold THF1, then the wearable device 410 does not send a DVFS+ signal to the companion device 430. Similarly, if the motion difference ΔM is below a first motion difference threshold THM1, then the wearable device 410 does not send a DVFS+ signal to the companion device 430.

If the frame difference ΔF is above the first frame difference threshold THF1 but below a second frame difference threshold THF2, then the wearable device 410 sends a DVFS-2 level request signal to the companion device 430 so that the compute subsystem 438 operates in accordance with DVFS-2. Similarly, if the motion difference ΔM is above the first motion difference threshold THM1 but below a second motion difference threshold THM2, then the wearable device 410 sends a DVFS-2 signal to the companion device 430 so that the compute subsystem 438 operates in accordance with DVFS-2.

If the frame difference ΔF is above the second frame difference threshold THF2 but below a third frame difference threshold THF3, then the wearable device 410 sends a DVFS-3 level request signal to the companion device 430 so that the compute subsystem 438 operates in accordance with DVFS-3. Similarly, if the motion difference ΔM is above the second motion difference threshold THM2 but below a third motion difference threshold THM3, then the wearable device 410 sends a DVFS-3 signal to the companion device 430 so that the compute subsystem 438 operates in accordance with DVFS-2; and so on, as indicated in the table.

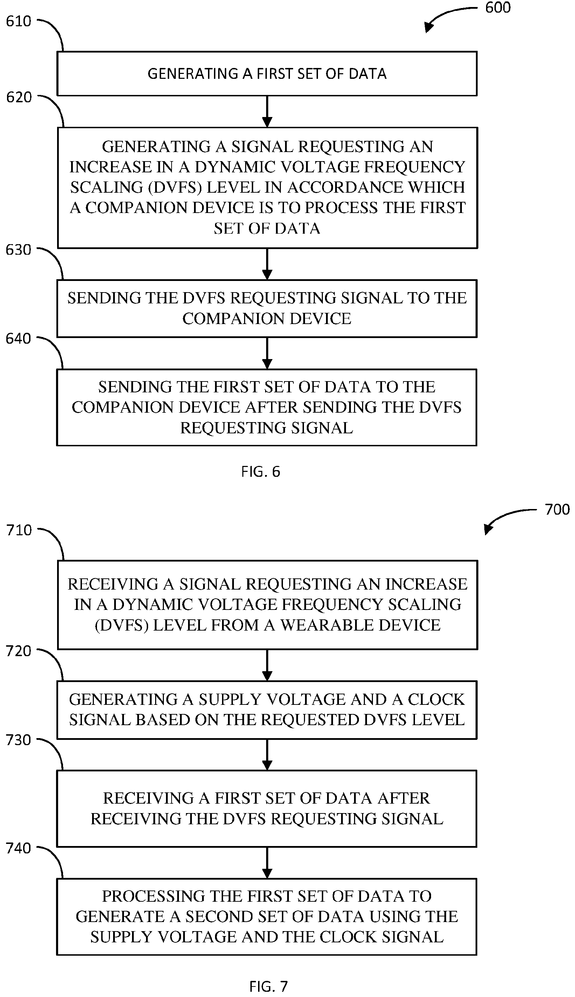

FIG. 6 illustrates a flow diagram of an example method 600 of operating a wearable device in accordance with another aspect of the disclosure. The method 600 includes generating a first set of data (block 610). An example of a means for generating a first set of data includes the compute subsystem 414 of the wearable device 410.

The method 600 further includes generating a signal requesting an increase in a dynamic voltage frequency scaling (DVFS) level in accordance which a companion device is to process the first set of data (block 620). An example of a means for generating a signal requesting an increase in a dynamic voltage frequency scaling (DVFS) level in accordance which a companion device is to process the first set of data includes the DVFS subsystem 420 of the wearable device 410.

Additionally, the method 600 includes sending the DVFS requesting signal to the companion device (block 630). An example of means for sending the DVFS requesting signal to the companion device includes the communication interface 422 of the wearable device 410. Further, the method 600 includes sending the first set of data to the companion device after sending the DVFS requesting signal (block 640). An example of means for sending the first set of data to the companion device after sending the DVFS requesting signal includes the communication interface 422 of the wearable device 410.

Although not explicitly illustrated, the method 600 may include generating a first set of one or more image frames, wherein the first set of data is based on the first set of one or more image frames. An example of means for generating a first set of one or more image frames includes the camera subsystem 412 of the wearable device 410.

The method 600 may also include generating a second set of one or more image frames prior to generating the first set of one or more image frames, and generating an image difference between the first set of one or more image frames and the second set of one or more image frames, wherein sending the DVFS requesting signal is in response to the image difference exceeding a threshold. An example of means for generating a second set of one or more image frames includes the camera subsystem 412 of the wearable device 410. An example of means for generating an image difference between the first set of one or more image frames and the second set of one or more image frames includes the compute subsystem 414 of the wearable device 410.

The method 600 may further include generating the first set of data based on detecting at least one new object in the first set of one or more image frames. An example of means for generating the first set of data based on detecting at least one new object in the first set of one or more image frames includes the compute subsystem 414 of the wearable device 410. The method 600 may also include generating the first set of data based on a movement of at least one object in the first set of one or more image frames. An example of means for generating the first set of data based on a movement of at least one object in the first set of one or more image frames includes the compute subsystem 414 of the wearable device 410.

The method 600 may further include detecting motion of the wearable device, wherein sending the DVFS requesting signal is in response to the motion exceeding a threshold. An example of means for detecting motion of the wearable device includes the IMU 416 of the wearable device 410.

FIG. 7 illustrates a flow diagram of an example method 700 of operating a companion device in accordance with another aspect of the disclosure. The method 700 includes receiving a signal requesting an increase in a dynamic voltage frequency scaling (DVFS) level from a wearable device (block 710). An example of a means for receiving a signal requesting an increase in a dynamic voltage frequency scaling (DVFS) level from a wearable device includes the communication interface 432 of the companion device 430.

The method 700 further includes generating a supply voltage and a clock signal based on the requested DVFS level (block 720). An example of means for generating a supply voltage and a clock signal based on the requested DVFS level includes the DVFS subsystem 436 of the companion device 430.

Additionally, the method 700 includes receiving a first set of data after receiving the DVFS requesting signal (block 730). An example of means for receiving a first set of data after receiving the DVFS requesting signal includes the communication interface 432 of the companion device 430. Further, the method 700 includes processing the first set of data to generate a second set of data using the supply voltage and the clock signal (block 740). An example of means for processing the first set of data to generate a second set of data based on the supply voltage and the clock signal includes the compute subsystem 438 of the companion device 430.

Although not explicitly illustrated, the method 700 may include sending the second set of data to the wearable device. An example of means for sending the second set of data to the wearable device includes the communication interface 432 of the companion device 430.

Some of the components described herein, such as one or more of the subsystems, thermal controllers, and communication interfaces, may be implemented using a processor. A processor, as used herein, may be any dedicated circuit, processor-based hardware, a processing core of a system on chip (SOC), etc. Hardware examples of a processor may include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure.

The processor may be coupled to memory (e.g., generally a computer-readable media or medium), such as a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The memory may store computer-executable code (e.g., software). Software shall be construed broadly to mean instructions, instruction sets, code, code segments, program code, programs, subprograms, software modules, applications, software applications, software packages, routines, subroutines, objects, executables, threads of execution, procedures/processes, functions, etc., whether referred to as software, firmware, middleware, microcode, hardware description language, or otherwise.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the disclosure. Thus, the disclosure is not intended to be limited to the examples described herein but is to be accorded the widest scope consistent with the principles and novel features disclosed herein.

## Claims

1. A wearable device (410), comprising:
a compute subsystem (414) configured to generate a first set of data;
a dynamic voltage frequency scaling, DVFS, subsystem (420) configured to generate a signal requesting an increase in a DVFS level in accordance which a companion device (430) is to process the first set of data; and
a communication interface (422) configured to send the DVFS requesting signal prior to sending the first set of data to the companion device (430).

2. The wearable device (410) of claim 1, further comprising a camera subsystem (412) configured to generate a first set of one or more image frames, wherein the first set of data is based on the first set of one or more image frames.

3. The wearable device (410) of claim 2, wherein:
the camera subsystem (412) is configured to generate a second set of one or more image frames prior to generating the first set of one or more image frames;
the compute subsystem (414) is configured to generate an image difference between the first set of one or more image frames and the second set of one or more image frames; and
the DVFS subsystem (420) is configured to send the DVFS requesting signal in response to the image difference exceeding a first threshold.

4. The wearable device (410) of claim 3, wherein the first threshold is among a set of increasing thresholds corresponding to a set of increasing DVFS levels, respectively, wherein the increased DVFS level indicated by the DVFS requesting signal is one of the set of increasing DVFS levels depending on where the first threshold is situated within the set of increasing thresholds.

5. The wearable device (410) of claim 2, wherein the compute subsystem (414) is configured to generate the first set of data based on at least one new object detected in the first set of one or more image frames.

6. The wearable device (410) of claim 2, wherein the compute subsystem (414) is configured to generate the first set of data based on a movement of at least one previously-detected object in the first set of one or more image frames.

7. The wearable device (410) of claim 1, further comprising an inertia measurement unit, IMU, (416) configured to detect motion of the wearable device (410), wherein the DVFS subsystem (420) is configured to send the DVFS requesting signal in response to the motion exceeding a first threshold.

8. The wearable device (410) of claim 7, wherein the first threshold is among a set of increasing thresholds corresponding to a set of increasing DVFS levels, respectively, wherein the increased DVFS level indicated by the DVFS requesting signal is one of the set of increasing DVFS levels depending on where the first threshold is situated within the set of increasing thresholds.

9. The wearable device (410) of claim 1, further comprising a display subsystem (418) , wherein the compute subsystem (414) is configured to:
receive a second set of data from the companion device (430) via the communication interface (422), wherein the second set of data is based on the first set of data; and
cause at least one image to be rendered on the display subsystem (418) based on the second set of data.

10. A method (600) of operating a wearable device, comprising:
generating (610) a first set of data;
generating (620) a signal requesting an increase in a dynamic voltage frequency scaling, DVFS, level in accordance which a companion device is to process the first set of data;
sending (630) the DVFS requesting signal to the companion device; and
sending (640) the first set of data to the companion device after sending the DVFS requesting signal.

11. A companion device (430), comprising:
a communication interface (432) configured to receive a signal requesting an increase in a dynamic voltage frequency scaling, DVFS, level from a wearable device (410);
a DVFS subsystem (436) configured to generate a supply voltage and a clock signal based on the requested DVFS level; and
a compute subsystem (438) configured to receive the supply voltage and clock signal from the DVFS subsystem, wherein the communication interface (432) is configured to receive a first set of data from the wearable device (410) after receiving the DVFS requesting signal, wherein the compute subsystem (438) is configured to process the first set of data to generate a second set of data based on the supply voltage and the clock signal.

12. The companion device (430) of claim 11, wherein the communication interface (432) is configured to send the second set of data to the wearable device (410).

13. The companion device (430) of claim 11, wherein the first set of data relates to one or more objects in one or more image frames generated by the wearable device (410).

14. The companion device (430) of claim 11, wherein the second set of data relates to image data for rendering by the wearable device (410).

15. A method (700) of operating a companion device, comprising:
receiving (710) a signal requesting an increase in a dynamic voltage frequency scaling, DVFS, level from a wearable device;
generating (720) a supply voltage and a clock signal based on the requested DVFS level;
receiving (730) a first set of data after receiving the DVFS requesting signal; and
processing (740) the first set of data to generate a second set of data based on the supply voltage and the clock signal.

## Patentansprüche

1. Ein tragbares Gerät (410), aufweisend:
ein Rechen-Subsystem (414), das konfiguriert ist zum Generieren eines ersten Satzes von Daten,
ein Dynamische-Spannungs-und-Frequenzskalierung (Dynamic Voltage Frequency Scaling bzw. DVFS)-Subsystem (420), das konfiguriert ist zum Generieren eines Signals, das eine Erhöhung einer DVFS-Stufe, gemäß der ein Begleitgerät (430) den ersten Satz von Daten verarbeiten soll, anfragt, und
eine Kommunikationsschnittstelle (422), die konfiguriert ist zum Senden des DVFS-Anfragesignals vor dem Senden des ersten Satzes von Daten an das Begleitgerät (430).

2. Tragbares Gerät (410) nach Anspruch 1, das weiterhin ein Kamera-Subsystem (412) aufweist, das konfiguriert ist zum Generieren eines ersten Satzes eines oder mehrerer Bildrahmen, wobei der erste Satz von Daten auf dem ersten Satz eines oder mehrerer Bildrahmen basiert.

3. Tragbares Gerät (410) nach Anspruch 2, wobei:
das Kamera-Subsystem (412) konfiguriert ist zum Generieren eines zweiten Satzes eines oder mehrerer Bildrahmen vor dem Generieren des ersten Satzes eines oder mehrerer Bildrahmen,
das Rechen-Subsystem (414) konfiguriert ist zum Generieren einer Bilddifferenz zwischen dem ersten Satz eines oder mehrerer Bildrahmen und dem zweiten Satz eines oder mehrerer Bildrahmen, und
das DVFS-Subsystem (420) konfiguriert ist zum Senden des DVFS-Anfragesignals in Antwort darauf, dass die Bilddifferenz einen ersten Schwellenwert überschreitet.

4. Tragbares Gerät (410) nach Anspruch 3, wobei der erste Schwellenwert zu einem Satz von zunehmenden Schwellenwerten in Entsprechung zu einem Satz von jeweils zunehmenden DVFS-Stufen gehört, wobei die durch das DVFS-Anfragesignal angegebene erhöhte DVFS-Stufe eine aus dem Satz von zunehmenden DVFS-Stufen in Abhängigkeit davon, wo der erste Schwellenwert in dem Satz von zunehmenden Schwellenwerten angeordnet ist, ist.

5. Tragbares Gerät (410) nach Anspruch 2, wobei das Rechen-Subsystem (414) konfiguriert ist zum Generieren des ersten Satzes von Daten basierend auf wenigstens einem neuen Objekt, das in dem ersten Satz eines oder mehrerer Bildrahmen erfasst wird.

6. Tragbares Gerät (410) nach Anspruch 2, wobei das Rechen-Subsystem (414) konfiguriert ist zum Generieren des ersten Satzes von Daten basierend auf einer Bewegung wenigstens eines zuvor erfassten Objekts in dem ersten Satz eines oder mehrerer Bildrahmen.

7. Tragbares Gerät (410) nach Anspruch 1, das weiterhin eine Trägheitsmesseinheit (Inertia Measurement Unit bzw. IMU) (416), die konfiguriert ist zum Erfassen einer Bewegung des tragbaren Geräts (410), aufweist, wobei das DVFS-Subsystem (420) konfiguriert ist zum Senden des DVFS-Anfragesignals in Antwort darauf, dass die Bewegung einen ersten Schwellenwert überschreitet.

8. Tragbares Gerät (410) nach Anspruch 7, wobei der erste Schwellenwert zu einem Satz von zunehmenden Schwellenwerten in Entsprechung zu einem Satz von jeweils zunehmenden DVFS-Stufen gehört, wobei die durch das DVFS-Anfragesignal angegebene erhöhte DVFS-Stufe eine aus dem Satz von zunehmenden DVFS-Stufen in Abhängigkeit davon, wo der erste Schwellenwert in dem Satz von zunehmenden Schwellenwerten angeordnet ist, ist.

9. Tragbares Gerät (410) nach Anspruch 1, das weiterhin ein Anzeige-Subsystem (418) aufweist, wobei das Rechen-Subsystem (414) konfiguriert ist zum:
Empfangen eines zweiten Satzes von Daten von dem Begleitgerät (430) über die Kommunikationsschnittstelle (422), wobei der zweite Satz von Daten auf dem ersten Satz von Daten basiert, und
Veranlassen des Aufbereitens wenigstens eines Bilds an dem Anzeige-Subsystem (418) basierend auf dem zweiten Satz von Daten.

10. Ein Verfahren (600) zum Betreiben eines tragbaren Geräts, aufweisend:
Generieren (610) eines ersten Satzes von Daten,
Generieren (620) eines Signals, das eine Erhöhung einer Dynamische-Spannungs-und-Frequenzskalierung (Dynamic Voltage Frequency Scaling bzw. DVFS)-Stufe, gemäß der ein Begleitgerät den ersten Satz von Daten verarbeiten soll, anfragt,
Senden (630) des DVFS-Anfragesignals an das Begleitgerät, und
Senden (640) des ersten Satzes von Daten an das Begleitgerät nach dem Senden des DVFS-Anfragesignals.

11. Ein Begleitgerät (430), aufweisend:
eine Kommunikationsschnittstelle (432), die konfiguriert ist zum Empfangen eines Signals, das eine Erhöhung einer Dynamische-Spannungs-und-Frequenzskalierung (Dynamic Voltage Frequency Scaling bzw. DVFS)-Stufe anfragt, von einem tragbaren Gerät (410),
ein DVFS-Subsystem (436), das konfiguriert ist zum Generieren einer Versorgungsspannung und eines Taktsignals basierend auf der angefragten DVFS-Stufe, und
ein Rechen-Subsystem (438), das konfiguriert ist zum Empfangen der Versorgungsspannung und des Taktsignals von dem DVFS-Subsystem, wobei die Kommunikationsschnittstelle (432) konfiguriert ist zum Empfangen eines ersten Satzes von Daten von dem tragbaren Gerät (410) nach dem Empfangen des DVFS-Anfragesignals, wobei das Rechen-Subsystem (438) konfiguriert ist zum Verarbeiten des ersten Satzes von Daten für das Generieren eines zweiten Satzes von Daten basierend auf der Versorgungsspannung und dem Taktsignal.

12. Begleitgerät (430) nach Anspruch 11, wobei die Kommunikationsschnittstelle (432) konfiguriert ist zum Senden des zweiten Satzes von Daten an das tragbare Gerät (410).

13. Begleitgerät (430) nach Anspruch 11, wobei der erste Satz von Daten auf ein oder mehrere Objekte in einem oder mehreren durch das tragbare Gerät (410) generierten Bildrahmen bezogen ist.

14. Begleitgerät (430) nach Anspruch 11, wobei der zweite Satz von Daten auf Bilddaten für das Aufbereiten durch das tragbare Gerät (410) bezogen ist.

15. Ein Verfahren (700) zum Betreiben eines Begleitgeräts, aufweisend:
Empfangen (710) eines Signals, das eine Erhöhung einer Dynamische-Spannungs-und-Frequenzskalierung (Dynamic Voltage Frequency Scaling bzw. DVFS)-Stufe anfragt, von einem tragbaren Gerät,
Generieren (720) einer Versorgungsspannung und eines Taktsignals basierend auf der angefragten DVFS-Stufe,
Empfangen (730) eines ersten Satzes von Daten nach dem Empfangen des DVFS-Anfragesignals, und
Verarbeiten (740) des ersten Satzes von Daten für das Generieren eines zweiten Satzes von Daten basierend auf der Versorgungsspannung und dem Taktsignal.

## Revendications

1. Dispositif portable (410), comprenant :
un sous-système de calcul (414) configuré pour générer un premier ensemble de données ;
un sous-système de mise à l'échelle dynamique de la fréquence de tension, DVFS, (420) configuré pour générer un signal de requête d'une augmentation d'un niveau DVFS en fonction duquel un dispositif compagnon (430) doit traiter le premier ensemble de données ; et
une interface de communication (422) configurée pour envoyer le signal de requête DVFS avant d'envoyer le premier ensemble de données au dispositif compagnon (430).

2. Dispositif portable (410) selon la revendication 1, comprenant en outre un sous-système de caméra (412) configuré pour générer un premier ensemble d'une ou de plusieurs trames d'image, dans lequel le premier ensemble de données est basé sur le premier ensemble d'une ou de plusieurs trames d'image.

3. Dispositif portable (410) selon la revendication 2, dans lequel :
le sous-système de caméra (412) est configuré pour générer un deuxième ensemble d'une ou de plusieurs trames d'image avant de générer le premier ensemble d'une ou de plusieurs trames d'image ;
le sous-système de calcul (414) est configuré pour générer une différence d'image entre le premier ensemble d'une ou de plusieurs trames d'image et le deuxième ensemble d'une ou de plusieurs trames d'image ; et
le sous-système DVFS (420) est configuré pour envoyer le signal de requête DVFS en réponse au dépassement d'un premier seuil par la différence d'image.

4. Dispositif portable (410) selon la revendication 3, dans lequel le premier seuil fait partie d'un ensemble de seuils croissants correspondant à un ensemble de niveaux DVFS croissants, respectivement, dans lequel le niveau DVFS accru indiqué par le signal de requête DVFS est l'un des niveaux de l'ensemble de niveaux DVFS croissants en fonction de l'emplacement où se situe le premier seuil au sein de l'ensemble des seuils croissants.

5. Dispositif portable (410) selon la revendication 2, dans lequel le sous-système de calcul (414) est configuré pour générer le premier ensemble de données sur la base d'au moins un nouvel objet détecté dans le premier ensemble d'une ou de plusieurs trames d'image.

6. Dispositif portable (410) selon la revendication 2, dans lequel le sous-système de calcul (414) est configuré pour générer le premier ensemble de données sur la base d'un mouvement d'au moins un objet précédemment détecté dans le premier ensemble d'une ou de plusieurs trames d'image.

7. Dispositif portable (410) selon la revendication 1, comprenant en outre une unité de mesure d'inertie, IMU, (416) configurée pour détecter un mouvement du dispositif portable (410), dans lequel le sous-système DVFS (420) est configuré pour envoyer le signal de requête DVFS en réponse au dépassement d'un premier seuil par le mouvement.

8. Dispositif portable (410) selon la revendication 7, dans lequel le premier seuil fait partie d'un ensemble de seuils croissants correspondant à un ensemble de niveaux DVFS croissants, respectivement, dans lequel le niveau DVFS accru indiqué par le signal de requête DVFS est l'un des niveaux de l'ensemble de niveaux DVFS croissants en fonction de l'emplacement où se situe le premier seuil au sein de l'ensemble des seuils croissants.

9. Dispositif portable (410) selon la revendication 1, comprenant en outre un sous-système d'affichage (418), dans lequel le sous-système de calcul (414) est configuré pour :
recevoir un deuxième ensemble de données en provenance du dispositif compagnon (430) par l'intermédiaire de l'interface de communication (422), dans lequel le deuxième ensemble de données est basé sur le premier ensemble de données ; et
amener au moins une image à être restituée sur le sous-système d'affichage (418) sur la base du deuxième ensemble de données.

10. Procédé (600) de fonctionnement d'un dispositif portable, comprenant :
la génération (610) d'un premier ensemble de données ;
la génération (620) d'un signal de requête d'une augmentation d'un niveau de mise à l'échelle dynamique de la fréquence de tension, DVFS, en fonction duquel un dispositif compagnon doit traiter le premier ensemble de données ;
l'envoi (630) du signal de requête DVFS au dispositif compagnon ; et
l'envoi (640) du premier ensemble de données au dispositif compagnon après l'envoi du signal de requête DVFS.

11. Dispositif compagnon (430), comprenant :
une interface de communication (432) configurée pour recevoir un signal de requête d'une augmentation d'un niveau de mise à l'échelle dynamique de la fréquence de tension, DVFS, en provenance d'un dispositif portable (410) ;
un sous-système DVFS (436) configuré pour générer une tension d'alimentation et un signal d'horloge sur la base du niveau DVFS demandé ; et
un sous-système de calcul (438) configuré pour recevoir la tension d'alimentation et le signal d'horloge en provenance du sous-système DVFS, dans lequel l'interface de communication (432) est configurée pour recevoir un premier ensemble de données en provenance du dispositif portable (410) après réception du signal de requête DVFS, dans lequel le sous-système de calcul (438) est configuré pour traiter le premier ensemble de données pour générer un deuxième ensemble de données sur la base de la tension d'alimentation et du signal d'horloge.

12. Dispositif compagnon (430) selon la revendication 11, dans lequel l'interface de communication (432) est configurée pour envoyer le deuxième ensemble de données au dispositif portable (410).

13. Dispositif compagnon (430) de la revendication 11, dans lequel le premier ensemble de données se rapporte à un ou plusieurs objets dans une ou plusieurs trames d'image générées par le dispositif portable (410).

14. Dispositif compagnon (430) de la revendication 11, dans lequel le deuxième ensemble de données concerne des données d'image destinées à être restituées par le dispositif portable (410).

15. Procédé (700) de fonctionnement d'un dispositif compagnon, comprenant :
la réception (710) d'un signal de requête d'une augmentation d'un niveau de mise à l'échelle dynamique de la fréquence de tension, DVFS, en provenance d'un dispositif portable ;
la génération (720) d'une tension d'alimentation et d'un signal d'horloge en fonction du niveau DVFS demandé ;
la réception (730) d'un premier ensemble de données après réception du signal de requête DVFS ; et
le traitement (740) du premier ensemble de données pour générer un deuxième ensemble de données sur la base de la tension d'alimentation et du signal d'horloge.
